# FASCICULE DE BREVET EUROPEEN

(11) **EP 2 262 684 B1**
(45) Date de publication et mention de la délivrance du brevet: **09.01.2013**
(21) Numéro de dépôt: 09727499.7
(22) Date de dépôt: 12.03.2009
(51) Int. Cl.: H05B 3/24

(54) **LEVRE D'UNE ENTREE D'AIR D'UNE NACELLE DE TURBOREACTEUR**
LUFTEINLASSLIPPE FÜR EINE TRIEBWERKSGONDEL
AIR INTAKE LIP FOR TURBOJET NACELLE

(30) Priorité: 14.03.2008 FR 0801413
(43) Date de publication de la demande: 22.12.2010
(73) Titulaire: Aircelle, 76700 Gonfreville l'Orcher (FR)
(72) Inventeur: ROGER, Christian, F-76310 Sainte (FR)
(74) Mandataire: Maureau, Philippe
(86) Numéro de dépôt international: PCT/FR2009/050412
(87) Numéro de publication internationale: WO 2009/122066

(56) Documents cités:
- EP-A- 1 495 963
- EP-A- 1 528 837
- EP-A- 1 845 018
- FR-A- 2 859 866
- FR-A- 2 888 562
- US-A- 5 393 586

## Description

La présente invention concerne une lèvre d'une entrée d'air d'une nacelle de turboréacteur.

Un avion est propulsé par un ou plusieurs ensembles propulsifs comprenant un turboréacteur logé dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée d'air adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle au niveau de la lèvre d'entrée d'air. La présence de glace ou de givre modifie les propriétés aérodynamiques de l'entrée d'air et perturbe l'acheminement de l'air vers la soufflante. En outre, des morceaux de glace peuvent éventuellement se détacher de la lèvre d'entrée d'air et entrer en collision avec des composants du turboréacteur tels que les aubes de la soufflante.

Les performances du turboréacteur étant liées à la quantité et à la qualité de la captation d'air réalisée par l'entrée d'air, il convient de dégivrer la lèvre d'entrée d'air lorsque de la glace ou du givre se forme sur celle-ci.

Une première solution pour dégivrer une lèvre d'entrée d'air est décrite dans le brevet US 4 688 757. Cette solution consiste à prélever de l'air chaud au niveau du compresseur du turboréacteur et à l'amener au niveau de la lèvre d'entrée d'air dont il réchauffe les parois en circulant à travers un canal intérieur de la lèvre d'entrée d'air. Toutefois, un tel dispositif nécessite un système de conduites d'amenée d'air chaud entre le turboréacteur et l'entrée d'air, ainsi qu'un système d'évacuation de l'air chaud au niveau de la lèvre d'entrée d'air. Ceci augmente la masse de l'ensemble propulsif, ce qui n'est pas souhaité.

De plus, un tel système entraîne une perte de performance du turboréacteur du fait du prélèvement d'une quantité d'air dans ce dernier.

En outre, la température de l'air chaud prélevé dans le turboréacteur étant généralement de l'ordre de 400°C, les pièces métalliques de la nacelle sont soumises, au niveau de l'entrée d'air, à un fort gradient de température générant des contraintes thermiques importantes sur ces pièces métalliques.

Une conséquence additionnelle d'un tel système est que pour éviter de multiplier les arrivées et sorties d'air chaud, la lèvre d'entrée d'air est réalisée d'une seule pièce, qui doit donc être entièrement changée en cas d'altération de son profil externe, par exemple due à un choc avec des éléments extérieurs tels gravier, oiseaux, grêle et autres.

Une deuxième solution, décrite dans le brevet EP 1 495 963, consiste à appliquer une résistance chauffante sur une paroi extérieure de la lèvre d'entrée d'air alimentée depuis une source d'électricité de la nacelle. Cette technologie permet de réaliser une lèvre d'entrée d'air modulaire à partir de plusieurs structures de base.

Cependant, la résistance chauffante est soumise à de nombreux chocs pouvant entraîner une usure prématurée de celle-ci, voire son dysfonctionnement.

Le document EP 1845 018 divulgue une lèvre selon le préambule de la revendication 1 de la présente demande.

Un tel dysfonctionnement de la résistance chauffante peut provoquer une accumulation de glace ou de givre sur l'entrée d'air et donc une diminution des performances du turboréacteur.

La présente invention a pour but de pallier tout ou partie des inconvénients précédemment évoqués.

Le problème technique à la base de l'invention consiste de préférence à fournir une lèvre d'une entrée d'air d'une nacelle de turboréacteur comprenant un dispositif de dégivrage qui soit de structure simple, fiable et légère.

A cet effet, la présente invention concerne d'une lèvre d'une entrée d'air d'une nacelle de turboréacteur, selon la revendication 1 de la présente demande.

Lorsque les moyens de connexion électrique sont reliés à une alimentation électrique, la structure alvéolaire du panneau forme une résistance chauffante assurant le dégivrage d'une surface à dégivrer située à proximité du dispositif de dégivrage.

La réalisation du dispositif de dégivrage à partir d'un panneau comprenant une structure alvéolaire permet d'obtenir une importante surface de chauffage et donc d'abaisser la température nécessaire au dégivrage d'une même surface à dégivrer, d'où un gain d'énergie et de fiabilité.

Il doit être noté que la structure alvéolaire forme une structure d'atténuation acoustique.

Ainsi, un avantage fondamental du dispositif de dégivrage consiste dans le fait qu'il remplit à la fois une fonction de dégivrage et une fonction d'atténuation acoustique.

De ce fait, le dispositif de dégivrage selon l'invention peut être utilisé pour remplacer les structures d'atténuation acoustique généralement disposées dans une entrée d'air d'une nacelle de turboréacteur.

L'utilisation d'un tel dispositif de dégivrage ne nécessite pas d'éléments supplémentaires de chauffage, d'où un gain en masse.

En outre, lorsque le dispositif de dégivrage selon l'invention est utilisé comme structure d'atténuation acoustique dans une entrée d'air, il est disposé à l'intérieur de l'entrée d'air et donc protégé contre des agressions extérieures.

De préférence, les alvéoles de la structure alvéolaire s'étendent sensiblement perpendiculairement au plan du panneau.

Avantageusement, la structure alvéolaire est réalisée à partir d'un ensemble de bandes adjacentes s'étendant dans une direction générale commune, deux bandes adjacentes étant alternativement en contact l'une de l'autre et éloignées l'une de l'autre de manière à former des alvéoles.

Selon un mode de réalisation de l'invention, le panneau comprend un premier et un second moyens de connexion électrique, les premières extrémités de chaque bande étant reliées au premier moyen de connexion électrique et les secondes extrémités de chaque bande étant reliées au second moyen de connexion électrique.

Selon une première alternative de l'invention, les bandes sont fixées les unes aux autres à l'aide de couches de colle disposées dans les zones de contact entre celles-ci, la colle destinée à coller les bandes entre elles étant de préférence électriquement isolante.

Selon une seconde alternative de l'invention, les bandes sont fixées les unes aux autres par soudage au niveau des zones de contact entre celles-ci.

Avantageusement, le panneau comprend des première et seconde feuilles électriquement isolantes recouvrant la structure alvéolaire de manière à obturer les alvéoles de la structure alvéolaire.

De préférence, le panneau comprend des éléments électriquement isolants recouvrant les bords de la structure alvéolaire.

De toute façon l'invention sera bien comprise à l'aide de la description qui suit en référence au dessin schématique annexé représentant, à titre d'exemple non limitatif, une forme d'exécution de cette lèvre et de ce dispositif de dégivrage.
La figure 1 est une représentation schématique en perspective d'une nacelle de turboréacteur.
La figure 2 est une vue agrandie en coupe transversale d'une structure d'une lèvre d'entrée d'air comprenant un dispositif de dégivrage selon l'invention.
La figure 3 est une vue en perspective du dispositif de dégivrage de la figure 2.
Les figures 4 et 5 sont des vues en perspectives de deux variantes de fixation des bandes formant la structure alvéolaire du dispositif de dégivrage.
Les figures 6 et 7 représentent deux variantes de réalisation du dispositif de dégivrage selon l'invention.

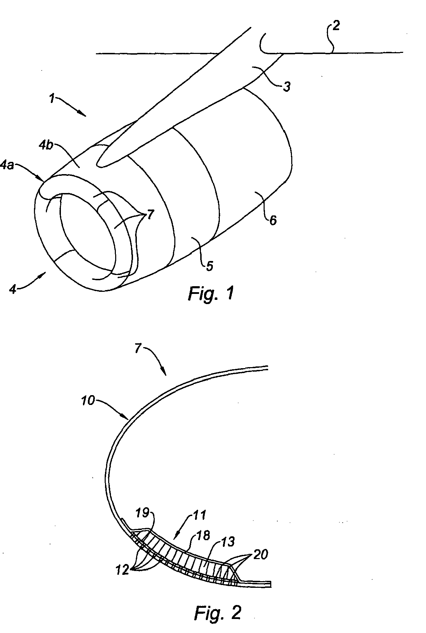

Une nacelle 1 selon l'invention telle que représentée sur la figure 1 constitue un logement tubulaire pour un turboréacteur (non visible) dont elle sert à canaliser les flux d'air qu'il génère. La nacelle 1 est située sous une aile 2 à laquelle elle est rattachée par un mât 3. Elle abrite également différents composants nécessaires au fonctionnement du turboréacteur.

Plus précisément, la nacelle 1 possède une structure comprenant une section avant formant une entrée d'air 4, une section médiane 5 entourant une soufflante (non visible) du turboréacteur, et une section arrière 6 entourant le turboréacteur et abritant un système d'inversion de poussée (non visible).

L'entrée d'air 4 se divise en deux parties, à savoir d'une part, une lèvre 4a d'entrée adaptée pour permettre la captation optimale vers le turboréacteur de l'air nécessaire à l'alimentation de la soufflante et des compresseurs internes du turboréacteur, et d'autre part, une structure aval 4b sur laquelle est rapportée la lèvre 4a et destinée à canaliser convenablement l'air vers les aubes de la soufflante. L'ensemble est rattaché en amont d'un carter de la soufflante appartenant à la section médiane 5 de la nacelle 1.

Comme représenté aux figures 1 et 2, la lèvre 4a d'entrée d'air 4 est réalisée à l'aide de structures 7 rapportées sur la structure aval 4b sur toute la périphérie de la nacelle 1.

La lèvre 4a d'entrée d'air 4 est ici réalisée à partir de quatre structures 7. Elle pourrait bien évidemment être réalisée à l'aide de deux structures 7, en une seule pièce ou encore à partir de plus de quatre structures 7.

Chaque structure 7 comprend une paroi 10 mise en forme de manière à donner à la lèvre 4a le profil souhaité ainsi qu'un dispositif de dégivrage électrique 11. La paroi 10 peut être métallique ou réalisée en matière composite.

Le dispositif de dégivrage électrique 11 est situé au contact d'une zone de la paroi 10 donnant sur l'entrant de la soufflante et pourvue d'une multitude de perforations 12 régulièrement espacées.

Comme montré sur les figures 2 à 7, le dispositif de dégivrage 11 est constitué d'un panneau comprenant une structure alvéolaire 13, du type nid d'abeille, en matériau électriquement conducteur, tel que du carbone, et des moyens de connexion électrique (21,22) reliés à la structure alvéolaire 13.

La structure alvéolaire 13 est sensiblement plane et les alvéoles 15 de cette dernière s'étendent sensiblement perpendiculairement au plan du panneau. La structure alvéolaire 13 forme une structure d'atténuation acoustique.

La structure alvéolaire 13 est réalisée à partir d'un ensemble de bandes adjacentes 16 s'étendant dans une direction générale commune, deux bandes adjacentes 16 étant alternativement en contact l'une de l'autre et éloignées l'une de l'autre de manière à former des alvéoles 15.

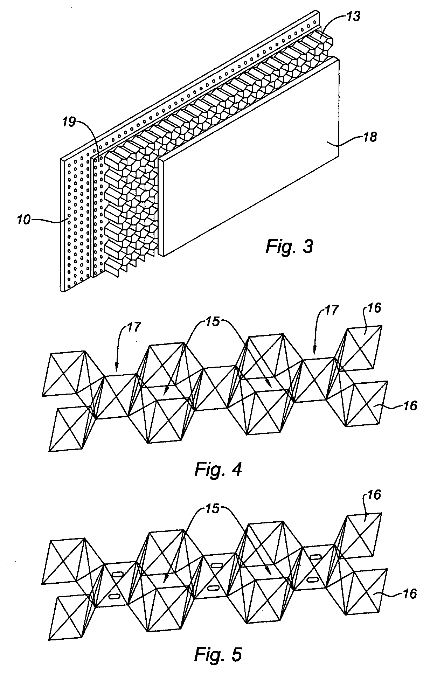

Selon une première variante de l'invention montrée sur la figure 4, les bandes 16 sont fixées les unes aux autres à l'aide de couches de colle disposées dans les zones de contact 17 entre celles-ci, la colle étant de préférence électriquement isolante. Dans ce cas, chaque bande 16 forme une résistance, et l'ensemble de bandes adjacentes 15 forme un ensemble de résistances disposées en parallèle.

Selon une seconde variante de l'invention montrée sur la figure 5, les bandes 16 sont fixées les unes aux autres par soudage au niveau des zones de contact 17 entre celles-ci. Dans ce cas, l'ensemble de bandes adjacentes 16 forme un ensemble de résistances disposées en série parallèle.

Comme montré plus particulièrement sur les figures 2 et 3, le panneau du dispositif de dégivrage comprend des première et seconde feuilles 18, 19 électriquement isolantes recouvrant la structure alvéolaire de manière à obturer les alvéoles 15 de la structure alvéolaire 13. Les première et seconde feuilles sont de préférence des feuilles de fibre de verre.

La seconde feuille 19, destinée à venir en contact de la paroi 10 de la structure 7, est pourvue d'une multitude de perforations 20 régulièrement espacées.

Il convient de noter que l'épaisseur de la première feuille 18 est supérieure à celle de la seconde feuille 19. De ce fait, la première feuille 18 forme un isolant thermique favorisant le transfert de la chaleur fournie par la structure alvéolaire 13 en direction de la paroi 10.

Le dispositif de dégivrage 11 est destiné à être branché sur une prise d'alimentation (non représentée) de la structure aval 4b par l'intermédiaire d'un connecteur (non représenté) relié par un câble d'alimentation électrique à des barrettes conductrices 21, 22 en contact avec la structure alvéolaire.

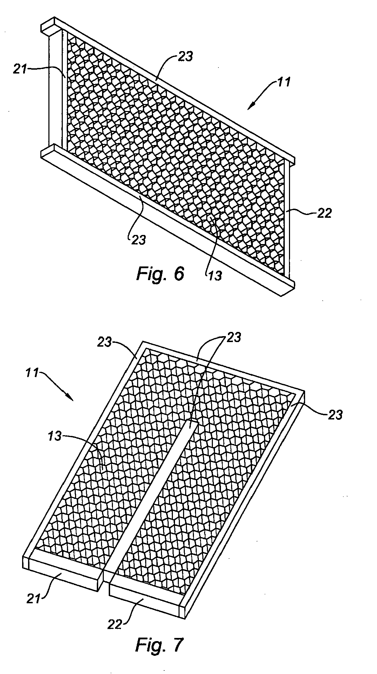

Selon une première variante de réalisation de la structure alvéolaire 13 montrée à la figure 6, la structure alvéolaire 13 est rectangulaire, et les bords transversaux de cette dernière sont en contact avec les première et seconde barrettes conductrices 21, 22. Dans ce cas, des éléments électriquement isolants 23 recouvrent les bords latéraux de la structure alvéolaire 13.

Selon une seconde variante de réalisation de la structure alvéolaire 13 montrée à la figure 7, la structure alvéolaire présente une forme sensiblement en U, et les première et seconde barrettes conductrices 21, 22 sont en contact avec les extrémités libres des branches du U. Dans ce cas, des éléments électriquement isolants 23 recouvrent les bords de la structure alvéolaire 13. Il convient de noter qu'un élément électriquement isolant 23 est également disposé entre les branches du U de manière à isoler électriquement ces dernières.

Comme il va de soi, l'invention ne se limite pas à la seule forme d'exécution de cette lèvre, qui a été décrite ci-dessus à titre d'exemple; elle en embrasse, au contraire, toutes les variantes de réalisation et d'application respectant le même principe.

## Revendications

1. Lèvre (4a) d'une entrée d'air (4) d'une nacelle (1) de turboréacteur réalisée à partir d'au moins une structure (7) comprenant une paroi (10), la surface intérieure de la paroi (10) comprenant un dispositif de dégivrage électrique (11), **caractérisée en ce que** le dispositif de dégivrage comporte au moins un panneau comprenant une structure alvéolaire (13) en matériau électriquement conducteur et des moyens de connexion électrique (21, 22) reliés à la structure alvéolaire.

2. Lèvre selon la revendication 1, dans laquelle les alvéoles (15) de la structure alvéolaire (13) s'étendent sensiblement perpendiculairement au plan du panneau.

3. Lèvre selon l'une des revendications 1 et 2, dans laquelle la structure alvéolaire (13) est réalisée à partir d'un ensemble de bandes adjacentes (16) s'étendant dans une direction générale commune, deux bandes adjacentes (16) étant alternativement en contact l'une de l'autre et éloignées l'une de l'autre de manière à former des alvéoles.

4. Lèvre selon la revendication 3, dans laquelle le panneau comprend un premier et un second moyens de connexion électrique (21, 22), les premières extrémités de chaque bande (16) étant reliées au premier moyen de connexion électrique (21) et les secondes extrémités de chaque bande étant reliées au second moyen de connexion électrique (22).

5. Lèvre selon l'une des revendications 3 et 4, dans laquelle les bandes (16) sont fixées les unes aux autres à l'aide de couches de colle disposées dans les zones de contact (17) entre celles-ci.

6. Lèvre selon la revendication 5, dans laquelle la colle destinée à coller les bandes entre elles est électriquement isolante.

7. Lèvre selon l'une des revendications 3 et 4, dans laquelle les bandes (16) sont fixées les unes aux autres par soudage au niveau des zones de contact (17) entre celles-ci.

8. Lèvre selon l'une des revendications 1 à 7, dans laquelle le panneau comprend des première et seconde feuilles électriquement isolantes (18, 19) recouvrant la structure alvéolaire (13) de manière à obturer les alvéoles (15) de la structure alvéolaire.

9. Lèvre selon l'une des revendications 1 à 8, dans laquelle le panneau comprend des éléments électriquement isolants (23) recouvrant les bords de la structure alvéolaire (13).

## Claims

1. An air intake (4) lip (4a) for turbojet nacelle (1), made from at least one structure (7) including a wall (10), the inner surface of the wall (10) including an electric de-icing device (11), **characterised in that** the electric de-icing device (11) comprises at least one panel including a cellular structure (13) made of electrically conductive material and an electrical connection means (21, 22) connected to the cellular structure.

2. The lip according to Claim 1, wherein the cells (15) of the cellular structure (13) extend substantially perpendicularly to the plane of the panel.

3. The lip according to one of Claims 1 and 2, wherein the cellular structure (13) is made from a system of adjacent strips (16) extending in a general common direction, two adjacent strips (16) being alternately in contact with each other and away from each other to form cells.

4. The lip according to Claim 3, wherein the panel comprises first and second electrical connection means (21, 22), the first end of each strip (16) being connected to the first electrical connection means (21) and the second end of each strip being connected to the second electrical connection means (22).

5. The lip according to one of Claims 3 and 4, wherein the strips (16) are fixed to each other by using adhesive layers arranged in the contact areas (17) among the latter.

6. The lip according to Claim 5, wherein the adhesive for gluing the strips to each other is electrically insulating.

7. The lip according to one of Claims 3 and 4, wherein the strips (16) are fixed to each other by welding at the contact areas (17) between them.

8. The lip according to one of Claims 1 to 7, wherein the panel includes first and second electrically insulating sheets (18, 19) covering the cellular structure (13) so to seal the cells (15) of the cellular structure.

9. The lip according to one of Claims 1 to 8, wherein the panel includes electrically insulating elements (23) covering the edges of the cellular structure (13).

## Patentansprüche

1. Lippe (4a) eines Lufteinlasses (4) einer Turbotriebwerksgondel (1), die aus einer wenigsten Struktur (7) hergestellt ist, die eine Wand (10) umfasst, wobei die Innenfläche der Wand (10) eine elektrische Enteisungsvorrichtung (11) umfasst, **dadurch gekennzeichnet, dass** die Enteisungsvorrichtung mindestens eine Platte aufweist, die eine Wabenstruktur (13) aus elektrisch leitendem Material und elektrische Anschlussmittel (21, 22) aufweist, die mit der Wabenstruktur verbunden sind.

2. Lippe nach Anspruch 1, wobei sich die Waben (15) der Wabenstruktur (13) etwa senkrecht zur Ebene der Platte erstrecken.

3. Lippe nach einem der Ansprüche 1 und 2, wobei die Wabenstruktur (13) aus einer Gruppe benachbarter Streifen (16) hergestellt ist, die sich in eine gemeinsame allgemeine Richtung erstrecken, wobei zwei benachbarte Streifen (16) abwechselnd miteinander im Kontakt und voneinander entfernt sind, um die Waben zu bilden.

4. Lippe nach Anspruch 3, wobei die Platte ein erstes und ein zweites elektrisches Anschlussmittel (21, 22) umfasst, wobei die ersten Enden jedes Streifens (16) mit dem ersten elektrischen Anschlussmittel (21) und die zweiten Enden jedes Streifens mit dem zweiten elektrischen Anschlussmittel (22) verbunden sind.

5. Lippe nach einem der Ansprüche 3 und 4, wobei die Streifen (16) aneinander mit Hilfe von Klebstoffschichten befestigt sind, die in den Kontaktzonen (17) zwischen ihnen angeordnet sind.

6. Lippe nach Anspruch 5, wobei der Klebstoff, der dazu bestimmt ist, die Streifen untereinander zu verkleben, elektrisch isolierend ist.

7. Lippe nach einem der Ansprüche 3 und 4, wobei die Streifen (16) durch Schweißen auf Ebene der Kontaktzonen (17) aneinander befestigt sind.

8. Lippe nach einem der Ansprüche 1 bis 7, wobei die Platte eine erste und zweite elektrisch isolierende Folie (18, 19) umfasst, die die Wabenstruktur (13) derart bedeckt, dass die Waben (15) der Wabenstruktur verschlossen werden.

9. Lippe nach einem der Ansprüche 1 bis 8, wobei die Platte elektrisch isolierende Elemente (23) umfasst, die die Ränder der Wabenstruktur (13) bedecken.
